# EUROPÄISCHE PATENTANMELDUNG

(11) **EP 3 470 742 A1**
(43) Veröffentlichungstag der Anmeldung: **17.04.2019**
(21) Anmeldenummer: 17196310.1
(22) Anmeldetag: 13.10.2017
(51) Int. Cl.: F24D 3/14, F16B 15/00

(54) **TACKERNADEL, TACKERNADELANORDNUNG SOWIE VERFAHREN UND VERWENDUNG HIERZU**

(71) Anmelder: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(57) **Zusammenfassung**

Der Gegenstand der vorliegenden Erfindung betrifft eine Tackernadel, insbesondere eine Tackernadel zum bodenseitigen Befestigung von Bodenheizungsleitungen, mit einem Mittelstück, von dem beabstandet voneinander zwei Schenkel abragen, wobei an dem von dem Mittelstück entfernten Ende der Schenkel je eine Spitze ausgebildet ist, und die Schenkel mindestens ein Widerhakenelement aufweisen, wobei die Tackernadel mittels Spritzgussverfahren hergestellt ist Weiter betrifft die Erfindung eine Tackernadelanordnung, ein Verfahren und eine Verwendung hierzu.

## Beschreibung

Die Erfindung betrifft eine Tackernadel, insbesondere eine Tackernadel zum bodenseitigen Befestigung von Bodenheizungsleitungen gemäß Anspruch 1.

Auch betrifft die Erfindung eine Tackernadelanordnung, umfassend mehrere Tackernadeln gemäß Anspruch 7.

Zudem betrifft die Erfindung ein Verfahren zur Herstellung mindestens einer Tackernadel und/oder einer Tackernadelanordnung mit mehreren Tackernadeln gemäß Anspruch 10.

Nicht zuletzt betrifft die Erfindung eine Verwendung einer Tackernadel und/oder einer Tackernadelanordnung zur Befestigung von Leitungen oder eines Leitungssystem gemäß Anspruch 13.

Aus dem Stand der Technik sind allgemein Tackernadeln für verschiedene Anwendungen bekannt.

Beispielsweise ist aus der DE 20 2015 001 018 U1 eine Rohrklemme zur Fixierung eines Rohres auf einer durch Dorne penetrierbaren Montageplatte, unter der sich ein Untergrund befindet, mit einem im Wesentlichen U-förmigen Bügelelement, das zum Niederhalten des Rohres auf der Montageplatte zwei Seitenschenkel und einen diese verbindenden Basisabschnitt aufweist, wobei jeder Seitenschenkel an seinem dem Basisabschnitt abgewandten freien Ende einen spitz zulaufenden, dornartigen Endabschnitt aufweist, der flexibel mit dem übrigen Teil des betreffenden Seitenschenkels verbunden ist, wobei dass jeder dornartige Endabschnitt eine Länge aufweist, die größer als die Dickenerstreckung der Montageplatte ist, wobei die dornartigen Endabschnitte der Seitenschenkel beim Eindringen in die Montageplatte und Kontaktieren des Untergrundes zur Seite umlenkbar sind und sich winklig, insbesondere quer zur Dickenerstreckung der Montageplatte ausrichten.

Aus der DE 103 32 718 A1 ist ein höhenoptimiertes Tackersystem für Fußbodenheizungen bekannt, bei dem unterschiedlichen Rohrdimensionen durch integrierte Federelemente ausgeglichen werden und bei dem die Einstechtiefe der Nadelspitzen durch spezielle Stopper definiert und auf ein Minimum begrenzt bleibt.

Aus der DE 42 42 251 A1 ist eine Tackernadel zum Befestigen von Fußbodenheizungsrohr auf einer Isolierung bekannt, wobei die Tackernadel eine vorgesehene Längenausdehnung in Form eines federnden Elements aufweist, das so gestaltet ist, dass es sich während des Tackervorganges dehnt und sich anschließend wieder zusammenzieht. Hierdurch wird eine exakte Höhenfixierung des Heizrohres erreicht.

Es ist eine Aufgabe der vorliegenden Erfindung, eine Tackernadel, eine Tackernadelanordnung, ein Verfahren zur Herstellung mindestens einer Tackernadel und eine Verwendung für Tackernadeln zu schaffen, die eine verbessertes Befestigung von Rohren bei verbesserte Herstellung ermöglichen und deren Handhabe insbesondere in entsprechenden Setz- oder Tackergeräten erleichtert ist.

Diese und weitere Aufgaben werden gelöst durch eine Tackernadel nach Anspruch 1, eine Tackernadelanordnung nach Anspruch 7, ein Herstellverfahren nach Anspruch 10 und eine Verwendung nach Anspruch 13.

Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einer Tackernadel, insbesondere einer Tackernadel zum bodenseitigen Befestigung von Bodenheizungsleitungen, mit einem Mittelstück, von dem beabstandet voneinander zwei Schenkel abragen, vorgesehen ist, dass an dem von dem Mittelstück entfernten Ende der Schenkel je eine Spitze ausgebildet ist, und die Schenkel mindestens ein Widerhakenelement aufweisen, wobei die Tackernadel mittels Spritzgussverfahren hergestellt ist.

Die Tackernadel umfasst ein Mittelstück. Das Mittelstück ist vorzugsweise länglich ausgebildet mit zwei Enden. An den Enden schließt sich je ein Schenkel an. Die beiden Schenkel sind somit voneinander beabstandet angeordnet. Das Mittelstück kann in einer Ausführungsform balkenartig ausgebildet sein. Vorzugsweise ist das Mittelstück in dem Übergangsbereich von Mittelstück zu Schenkel abgerundet oder gebogen ausgebildet oder insgesamt bogenförmig ausgebildet, sodass sich in Verbindung mit den Schenkeln eine im Wesentlichen U-förmige oder C-förmige Tackernadel ergibt. Die Schenkel schließen mit dem Mittelstück einen Winkel ein. Vorzugsweise schließen beide Schenkel den gleichen Winkel mit dem Mittelstück ein. In einer anderen Ausführungsform schließen die beiden Schenkel je einen unterschiedlichen Winkel mit dem Mittelstück ein. In einer Ausführungsform sind die Schenkel parallel zueinander angeordnet. In anderen Ausführungsformen verändert sich der Abstand zwischen den Schenkeln in Schenkelerstreckungsrichtung. So vergrößert und/oder verringert sich der Abstand zwischen den Schenkeln in einer Ausführungsform zueinander mit steigendem Abstand zum Mittelstück. Das Mittelstück weist einen Querschnitt auf. Der Querschnitt weist vorzugsweise eine gewölbte, insbesondere eine konkave oder eine konvexe Form, zumindest an einer Seite des Mittelstücks auf. Die gewölbte Form setzt sich über den Übergangsbereich zu den Schenkeln fort. Vorzugsweise weisen die Schenkel -- zumindest abschnittsweise -- ebenfalls einen gewölbten Querschnitt auf, analog zu dem Mittelstück. Dabei setzt sich der gewölbte Querschnitt bis zu einer jeweiligen Spitze des Schenkels fort. Die jeweilige Spitze des Schenkels ist an dem von dem Mittelstück entfernten Ende des Schenkels ausgebildet. Die Spitze ist vorzugsweise einteilig mit dem Schenkel ausgebildet. Insbesondere ist die Spitze gelenkfrei mit dem jeweiligen Schenkel verbunden. Vorzugsweise ist die Spitze nicht-klappbar und/oder nicht schwenkbar relativ zu dem Schenkel ausgebildet. Der Querschnitt der Spitze ist sich verjüngend ausgebildet. Durch die Spitze wird ein Einbringen der Tackernadel in einen Untergrund erleichtert. Um ein ungewolltes Hinausbewegen der in den Untergrund eingebrachten Tackernadel zu verhindern, weist mindestens ein Schenkel mindestens ein Widerhakenelement auf. Vorzugsweise weisen beide Schenkel mindestens ein Widerhakenelement auf. In einer Ausführungsform sind die Widerhakenelemente der beiden Schenkel gleich ausgebildet. In einer anderen Ausführungsform sind die Widerhakenelemente der beiden Schenkel unterschiedlich ausgebildet. Das jeweilige Widerhakenelement umfasst mindestens einen von dem Schenkel schräg abragenden Arm auf. Dabei nimmt der Abstand des abragenden Arms von dem Schenkel entgegen einer Einbringrichtung zu, sodass sich der Widerhakeneffekt ergibt. In einer Ausführungsform ist je Widerhakenelement ein Arm vorgesehen. In einer bevorzugten Ausführungsform sind je Widerhakenelement mehrere abragende Arme vorgesehen, insbesondere zwei Arme. Bei einer Ausführungsform mit zwei abragenden Armen je Widerhakenelement ist das Widerhakenelement etwa pfeilspitzenförmig ausgebildet. Die Arme eines Widerhakenelements können gleich ausgebildet sein. Bevorzugt sind die Arme der Widerhakenelemente ungleich ausgebildet. In einer Ausführungsform ragt ein Arm des jeweiligen Widerhakenelements von der Spitze, insbesondere von dem Übergang Schenkel zu Spitze ab. In einer anderen Ausführungsform ragt ein Arm beabstandet von der Spitze ab. Die Länge der abragenden Arme eines Widerhakenelements ist in einer Ausführungsform unterschiedlich. In einer Ausführungsform ragt ein Arm von einer Innenseite des Schenkels, das heißt der Seite, die zu dem gegenüberliegenden Schenkel weist, ab. Ein zweiter Arm ragt bevorzugt auf der gegenüberliegenden Seite des ersten Arms, das heißt an einer Außenseite des Schenkels von diesem ab. Die Tackernadel ist bevorzugt als Spritzgussteil ausgebildet, sodass sich die Tackernadel in einem Spritzgussverfahren einfach herstellen lässt. Insbesondere ist die Tackernadel aus einem Kunststoff hergestellt, vorzugsweise mittels eines Kunststoffspritzverfahrens.

In einer Ausführungsform ist vorgesehen, dass an dem Mittelstück mindestens ein Verbindungselement ausgebildet ist, welches für eine Verbindung mit einer anderen Tackernadel vorgesehen ist. Das Verbindungselement ist vorzugsweise etwa mittig zwischen den Schenkeln an dem Mittelstück ausgebildet. Das Verbindungselement ist vorzugsweise einteilig mit dem Mittelstück ausgebildet. Dabei ragt das Verbindungselement bevorzugt an einer Vorder- bzw. Rückseite des Mittelstücks ab.

In einer weiteren Ausführungsform ist vorgesehen, dass die Spitze kegelförmig ausgebildet ist. Dabei läuft die Spitze im Wesentlichen konisch zu. Bei herkömmlichen Tackernadeln gemäß dem Stand der Technik, welche mittels Spritzgussverfahren hergestellt sind, ist die Spitze keilförmig ausgebildet. Durch eine unterschiedliche Anordnung der Formtrennlinie bei der erfindungsgemäßen Tackernadel ist eine kegelförmige Spitze möglich. Im Gegensatz zu dornartigen Spitzen ist durch die symmetrische Ausführung der Spitze als Kegelspitze eine einfachere Herstellung realisierbar.

In noch einer weiteren Ausführungsform ist vorgesehen, dass mindestens einer der Schenkel einen in Schenkelrichtung verlaufenden Schlitz aufweist. Vorzugsweise weisen beide Schenkel einen Schlitz auf. Bevorzugt sind beide Schenkel bzw. ist die Tackernadel spiegelsymmetrisch ausgebildet. Beim Formen der Tackernadel wird der Schlitz schieberfrei hergestellt. Der Schlitz erstreckt sich über den Schenkel bis in das Mittelstück. Dabei ist die Breite des Schlitzes bevorzugt konstant. In anderen Ausführungsformen variiert die Schlitzbreite. Statt eines Schlitzes kann eine Nut oder dergleichen vorgesehen sein. Vorzugsweise ist der Schlitz als Langloch ausgebildet, welches den Schenkel durchdringt.

Noch eine weitere Ausführungsform sieht vor, dass eine Außenseite der Schenkel und/oder des Mittelstücks konkav geformt ist mit einem jeweils seitlich erhöhten Rand und einem demgegenüber vertieften Zwischenabschnitt. Vorzugsweise verläuft der Schlitz in dem Zwischenabschnitt. Der an der Innenseite ausgebildete Arm ragt vorzugsweise aus dem Schlitz von dem Schenkel ab bzw. mündet in anderer Blickweise in den Schlitz. Der äußere Arm mündet vorzugsweise in die Spitze.

Wiederum eine weitere Ausführungsform sieht vor, dass das Widerhakenelement mindestens eine Nut aufweist. Die Nut ist an mindestens einem der Arme ausgebildet. Vorzugsweise ist die Nut an dem in die Spitze mündenden Arm ausgebildet. Dabei entspricht die Nutbreite etwa der Breite des anderen abragenden Arms und/oder der Breite des Schlitzes. Entsprechend entspricht die Breite des inneren Arms etwa der Breite des Schlitzes. Die Breite des Arms, der in die Spitze mündet, entspricht an seiner breitesten Stelle der Breite des Schenkels. Dieser äußere Arm ist sich verjüngend ausgebildet. Im Mündungsbereich entspricht die Breite des äußeren Arms der breite der Spitze. Die Nut ist vorzugsweise an einer zu dem Schenkel weisenden Seite des Arms ausgebildet. Dabei ragt die Nut bis in den Mündungsbereich. Andere Nutlängen sind möglich.

Der Schenkel und/oder das Mittelstück weist in einer Ausführungsform einen kontinuierlichen Querschnitt auf. Insbesondere ist/sind der Schenkel und/oder das Mittelstück ohne federelementartige Anformungen, beispielsweise durch einen spiralförmigen oder faltigartigen Verlaufsabschnitt ausgebildet. Insbesondere ist die Tackernadel ohne zusätzliches Längenausgleichselement, somit längenausgleichselementfrei ausgebildet. Die einteiligen Abschnitte der Tackernadel sind quer zu deren Erstreckungsrichtung elastisch. Ein Federelement in Richtung der Erstreckungsrichtung der jeweiligen Abschnitte ist nicht vorgesehen.

Die Erfindung schließt auch die technische Lehre ein, dass bei einer Tackernadelanordnung, umfassend mehrere Tackernadeln, von denen mindestens eine Tackernadel nach einer hier beschriebenen Tackernadel ausgebildet ist.

In einer Ausführungsform ist vorgesehen, dass mindestens zwei benachbarte Tackernadeln über mindestens ein Verbindungselement miteinander verbunden sind. Die Verbindungselemente der unterschiedlichen Tackernadeln gehen dabei ineinander über und sind somit als ein gemeinsames Verbindungselement ausgebildet. Insbesondere ist das Verbindungselement seitlich an dem Mittelstück und nicht an einer oberen Seite des Mittelstücks ausgebildet.

In einer weiteren Ausführungsform ist vorgesehen, dass das mindestens eine, die benachbarten Tackernadeln verbindende, Verbindungselement als einteiliger Steg ausgebildet ist, der mindestens eine Sollbruchstelle zum Trennen der verbundenen Tackernadeln aufweist. In einer anderen Ausführungsform sind mehrere stegförmige Anordnungen oder Stege vorgesehen. Die Stege sind vorzugsweise durch eine Aussparung voneinander beabstandet.

Mehrere Tackernadeln sind zu einer Tackernadelanordnung verbunden. Dabei sind die Tackernadeln so verbunden, dass diese zum Einsatz in einem Tacker- oder Setzgerät verwendbar sind. Die Tackernadeln sind dabei bündig hintereinander angeordnet. Die Anordnung erfolgt dabei so, dass die Anordnung in einer Blickrichtung auf eine Frontseite eine etwa U-förmige Form aufweist. Die Tackernadeln sind für eine bündige Verbindung über die jeweiligen Verbindungselemente miteinander verbunden. Dabei sind je zwei benachbarte Tackernadeln über die jeweiligen Verbindungselemente miteinander verbunden. Die gesamte Anordnung ist vorzugsweise einteilig ausgeführt. Die Verbindungselemente benachbarter Tackernadeln sind somit ebenfalls einteilig ausgebildet und gehen ineinander über. Die ineinander übergehenden Verbindungselemente sind bevorzugt stegförmig ausgebildet. In einer Ausführungsform umfassen die Verbindungselemente zwischen zwei benachbarten Verbindungselementen eine stegartige Verbindung bzw. sind als ein Steg ausgebildet. In anderen Ausführungsformen sind mehrere stegartige Verbindungen bzw. mehrere Stege vorgesehen. Um die Tackernadeln in einem Tacker- oder Setzgerät einzeln zu verwenden, ist zum Trennen der Tackernadelanordnung an den die Tackernadeln verbindenden Verbindungselementen eine Sollbruchstelle vorgesehen. Diese ist vorzugsweise als Materialverdünnung ausgebildet. Die Materialverdünnung kann in eine Breitenrichtung, eine Tiefenrichtung und/oder eine Längsrichtung erfolgten. Dabei kann die Sollbruchstelle auch durch das Verhältnis von Länge, Breite und/oder Tiefe des jeweiligen Stegs zueinander ausgebildet sein. So ist eine Sollbruchstelle beispielsweise durch ein Verhältnis der Länge des Stegs zu dessen Breite und/oder Dicke bzw. Tiefe von größer 1, insbesondere größer 2 realisiert. Die Verbindungselemente erlauben eine gekrümmte Anordnung der Tackernadeln. Entsprechend sind die jeweiligen Verbindungselemente elastisch ausgebildet, sodass die Verbindungselemente als eine Art Filmscharnier oder Filmgelenk fungieren. Über die Sollbruchstelle ist die Elastizität der Verbindungselemente begrenzt.

Auch schließt die Erfindung die technische Lehre ein, dass bei einem Verfahren zur Herstellung mindestens einer Tackernadel, insbesondere einer hier beschriebenen Tackernadel und/oder einer Tackernadelanordnung mit mehreren Tackernadeln, insbesondere einer hier beschriebenen Tackernadelanordnung vorgesehen ist, dass die jeweilige Tackernadel mittels Gussverfahren, insbesondere mittels Spritzgussverfahren, hergestellt wird wobei das jeweilige Verbindungselement einteilig und/oder integriert mit dem Mittelstück in einem Arbeitsschritt geformt wird. Die Tackernadel und/oder die Tackernadelanordnung ist/sind einteilig ausgebildet, vorzugsweise mit einem Gussverfahren. Vorzugsweise ist/sind die Tackernadel und/oder die Tackernadelanordnung aus einem Kunststoff ausgebildet. Somit lässt sich die Tackernadel/Tackernadelanordnung bevorzugt mittels Spritzgussverfahren herstellen. Die beiden für eine Verbindung zweier benachbarter Tackernadeln vorgesehenen Verbindungselemente sind bei einer Tackernadelanordnung einteilig miteinander verbunden ausgeführt. Das jeweilige Verbindungselement ist einteilig mit dem Mittelstück und/oder der Tackernadel ausgeführt. Wenngleich das Verbindungselement an einer beliebigen Stelle der Tackernadel angeordnet sein kann, so ist es bevorzugt, dass das Verbindungselement an dem Mittelstück ausgeformt ist. Vorzugsweise ist die Tackernadel symmetrisch ausgeführt, sodass das Verbindungselement etwa mittig an dem Mittelstück ausgeformt ist. Bei mehreren Verbindungselementen sind diese entsprechend einer gedachten Mittellinie gleich beabstandet von der Mittellinie entfernt angeordnet.

Nicht zuletzt schließt die Erfindung die technische Lehre ein, dass eine Verwendung mindestens einer hier beschriebenen Tackernadel und/oder einer hier beschriebenen Tackernadelanordnung zur Befestigung von Leitungen oder eines Leitungssystem, insbesondere von Fußbodenheizungsleitungen oder eines FußbodenheizungLeitungssystems, an einer Trägerfläche, insbesondere einem Fußboden. Die Leitung kann eine Hohlleitung wie ein Rohr sein. In einer anderen Ausführungsform kann die Leitung ein Kabel oder dergleichen sein. Vorzugsweise wird die Tackernadel für Leitungen von Rohren für Fußbodenheizungen verwendet.

Weitere, die Erfindung verbessernde Maßnahmen sind in den Unteransprüchen angegeben oder ergeben sich aus der nachfolgenden Beschreibung von mindestens einem Ausführungsbeispiel der Erfindung, welches in der Figur schematisch dargestellt ist. Sämtliche aus den Ansprüchen, der Beschreibung oder der Zeichnung hervorgehenden Merkmale und/oder Vorteile, einschließlich konstruktive Einzelheiten, räumliche Anordnung und Verfahrensschritte können sowohl für sich als auch in den verschiedensten Kombinationen erfindungswesentlich sein. In den Figuren werden gleiche oder ähnliche Bauteile mit gleichen oder ähnlichen Bezugszeichen gekennzeichnet.

Es zeigen:
- Fig. 1: schematisch in einer perspektivischen Ansicht eine Ausführungsform einer Tackernadel,
- Fig. 2: schematisch in einer perspektivischen Ansicht eine Ausführungsform einer Tackernadelanordnung mit Tackernadeln gemäß Fig. 1,
- Fig. 3: schematisch in einer Vorderansicht die Tackernadelanordnung nach Fig. 2,
- Fig. 4: schematisch in einer Seitenansicht die Tackernadelanordnung nach Fig. 2,
- Fig. 5: schematisch einen Detailausschnitt X der Ausführungsform nach Fig. 4,
- Fig. 6: schematisch in einer Draufsicht die Tackernadelanordnung nach Fig. 2 und
- Fig. 7: schematisch einen Detailausschnitt Y der Ausführungsform nach Fig. 6.

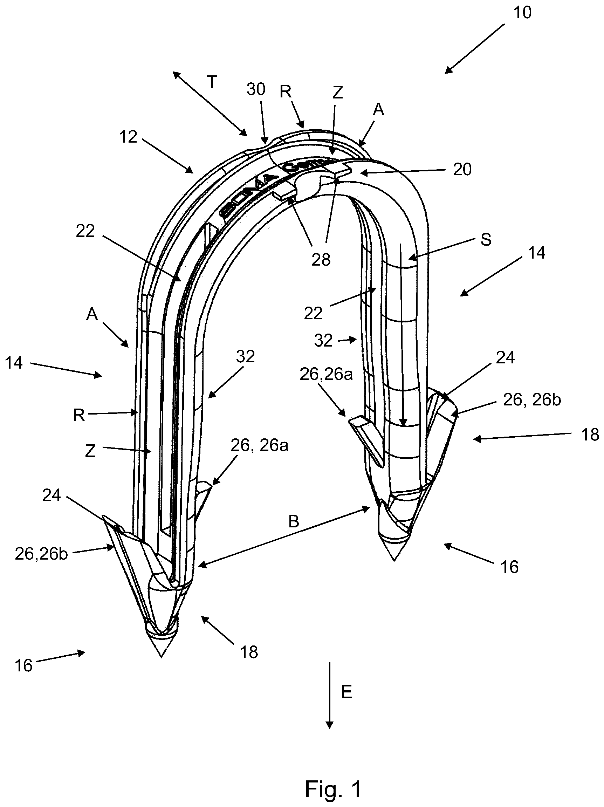

Die Figuren 1 bis 7 zeigen schematisch in unterschiedlichen Ansichten und Detailierungsgraden eine Ausführungsform einer Tackernadelanordnung.

Fig. 1 zeigt schematisch in einer perspektivischen Ansicht eine Ausführungsform der Tackernadel 10. Die Tackernadel 10 ist zur bodenseitigen Befestigung von Bodenheizungsleitungen, Kabeln und dergleichen ausgebildet. Dabei weist die Tackernadel 10 ein Mittelstück 12 auf. Von den beiden Enden des Mittelstücks 12 ragt an jeder Seite je ein Schenkel 14 ab. An dem von dem Mittelstück 12 entfernten Ende der Schenkel 14 ist jeweils eine Spitze 16 ausgebildet. Weiter ist mindestens ein Widerhakenelement 18 an dem Schenkel 14 vorgesehen. In Fig. 1 ist je Schenkel 14 ein Widerhakenelement 18 vorgesehen. An dem Mittelstück 12 ist ferner ein Verbindungselement 20 vorgesehen, welches zur Verbindung mit einer weiteren Tackernadel 10 ausgebildet ist. An jedem Schenkel 14 ist ein Schlitz 22 vorgesehen, der sich in Schenkelrichtung 2 erstreckt. Dabei durchdringt der Schlitz 22 den jeweiligen Schenkel 14 in eine Breitenrichtung B der Tackernadel 10. Das Mittelstück 12 und der Schenkel 14 weisen einen Querschnitt auf, der an einer Außenseite des Mittelstücks 12 bzw. des Schenkels 14 etwa konkav ausgebildet ist. Entsprechend ist eine Außenseite A der Schenkel 14 und/oder des Mittelstücks 12, welches in die Schenkel 14 übergeht, konkav geformt und/oder weist mindestens einen seitlich erhöhten Rand (R) und einen demgegenüber vertieften Zwischenabschnitt Z auf.

Die Tackernadel 10 gemäß Fig. 1 ist etwa U-förmig ausgebildet. Dabei ist die Tackernadel 10 einteilig ausgebildet, hier beispielsweise mittels eines Spritzgussverfahrens. Entsprechend ist die Tackernadel 10 bevorzugt aus einem spritzguss-geeigneten Material, beispielsweise Kunststoff hergestellt. Das Mittelstück 12 ist dabei gebogen ausgebildet und geht kontinuierlich über einen entsprechenden Übergangsbereich an beiden Seiten in je einen der Schenkel 14 über. Dabei schließt das bogenförmige Mittelstück 12 mit den Schenkeln 14 einen Winkel ein bzw. ist um einen Winkel gebogen. Der Winkel liegt vorzugsweise in einem Bereich von 180° plus/minus einigen Grad Abweichung. Bevorzugt ist die Tackernadel 10 spiegelsymmetrisch zu einer gedachten Mittellinie oder Mittelebene ausgebildet. Entsprechend sind Spitze 16, Widerhakenelement 18, Schenkel 14 und Mittelstück 12 gleich bzw. spiegelsymmetrisch ausgebildet und/oder angeordnet.

Die Schenkel schließen mit dem Mittelstück einen Winkel ein. Vorzugsweise schließen beide Schenkel betrachtet von einer Mittelebene oder einer Mittellinie den gleichen Winkel mit dem Mittelstück ein. Gemäß Fig. 1 sind die Schenkel etwa parallel zueinander angeordnet.

Der gewölbte Querschnitt des Mittelstücks 12 und der Schenkel 14 setzt sich bis zu einer jeweiligen Spitze 16 des Schenkels 14 fort. Der Querschnitt der Spitze 16 ist sich verjüngend ausgebildet und hier vorliegend kegelförmig. Durch die Spitze 16 wird ein Einbringen der Tackernadel 10 in einen Untergrund erleichtert. Um ein ungewolltes Hinausbewegen der in den Untergrund eingebrachten Tackernadel 10 zu verhindern, ist vorliegend an jedem Schenkel 14 je ein Widerhakenelement 18 vorgesehen. In der dargestellten Ausführungsform sind die Widerhakenelemente 18 der beiden Schenkel 14 gleich ausgebildet. Das jeweilige Widerhakenelement 18 umfasst hier zwei von dem Schenkel 14 schräg abragende Arme 26 auf. Je ein Arm 26a ragt zu einer Innenseite I der Schenkel 14 bzw. zu dem gegenüberliegenden Schenkel 14 hin. Je ein anderer Arm 26b ragt von der Außenseite A des jeweiligen Schenkels 14 weg von dem Schenkel 14. Dabei nimmt der Abstand des abragenden Arms 26a von dem Schenkel 14, in den dieser mündet, entgegen einer Einbringrichtung E zu, sodass sich der Widerhakeneffekt der Widerhakenelemente ergibt. Gemäß der dargestellten Ausführungsform mit zwei abragenden Armen 26 je Widerhakenelement 18 ist das Widerhakenelement 18 etwa pfeilspitzenförmig ausgebildet. Die Arme 26 eines Widerhakenelements 18 können gleich ausgebildet sein. Bevorzugt sind, wie in den Fig. Dargestellt, die Arme 26 der Widerhakenelemente 18 ungleich ausgebildet. Ein Arm 26b des jeweiligen Widerhakenelements 18 ragt von der Spitze 16, insbesondere von dem Übergang Schenkel 14 zu Spitze 16 ab. Der andere Arm 26a ragt beabstandet von der Spitze 16 ab. Die Länge der abragenden Arme 26 eines Widerhakenelements 18 ist hier unterschiedlich. Das jeweilige Widerhakenelement 18 weist mindestens eine Nut 24 auf. Die Nut 24 ist hier an dem Arm 26b ausgebildet. Genauer ist die Nut 24 an dem in die Spitze 18 mündenden Arm 26b ausgebildet und verläuft an dessen Außenseite, also der Seite des Arms 26b, die von dem Schenkel 14 weg weist. Dabei entspricht eine Nutbreite der Nut 24 etwa der Breite des anderen abragenden Arms 26a und/oder einer Breite des Schlitzes 22. Entsprechend entspricht die Breite des inneren Arms 26a etwa der Breite des Schlitzes 22. Die Breite des Arms 26b, der in die Spitze 18 mündest, entspricht an seiner breitesten Stelle etwa der Breite des Schenkels 14. Dieser äußere Arm 26b ist sich verjüngend ausgebildet. Im Mündungsbereich zu der Spitze 16 entspricht die Breite des äußeren Arms 26b der breite der Spitze 18. Die Nut 24 ist vorzugsweise an einer zu dem Schenkel 14 weisenden Seite des Arms 26, 26b ausgebildet. Dabei ragt die Nut 24 bis in den Mündungsbereich zu der Spitze 16.

An dem Mittelstück 12 ist ein Verbindungselement 20 ausgebildet. Dieses ist welches für eine Verbindung mit einer anderen Tackernadeln 10 vorgesehen ist. Das Verbindungselement 20 ist etwa mittig zwischen den Schenkeln 14 an dem Mittelstück 12 ausgebildet. Das Verbindungselement 20 ist hier einteilig mit dem Mittelstück 12 ausgebildet. In der hier dargestellten Ausführungsform weist das Verbindungselement 20 zwei stegartige Anformungen 28 oder kurz Stege auf. Diese ragen in eine Tiefenrichtung T quer, hier senkrecht, von dem Mittelstück 14 ab. Dabei sind die Stege 28 in Breitenrichtung B voneinander beabstandet. Hier sind die Stege 28 parallel zueinander beabstandet. Die Stege 28 sind hier lediglich an einer gemeinsamen Seite der Tackernadel 10 angeordnet. Auf der gegenüberliegenden Seite der Tackernadel 10 ist eine Ausformung oder Aussparung 30 vorgesehen [ZWECK?]. Der Verlauf des jeweiligen Schenkels 14 ist an einer Innenseite leicht gewellt. Hierzu ist eine entsprechende wellige Anformung 32 vorgesehen. Die Tackernadel 10 ist insgesamt als einteiliges Kunststoffspritzgussteil ausgebildet. Dabei ist die Tackernadel 10 so ausgebildet, dass diese in entsprechenden Gussformen schieberfrei herstellbar ist.

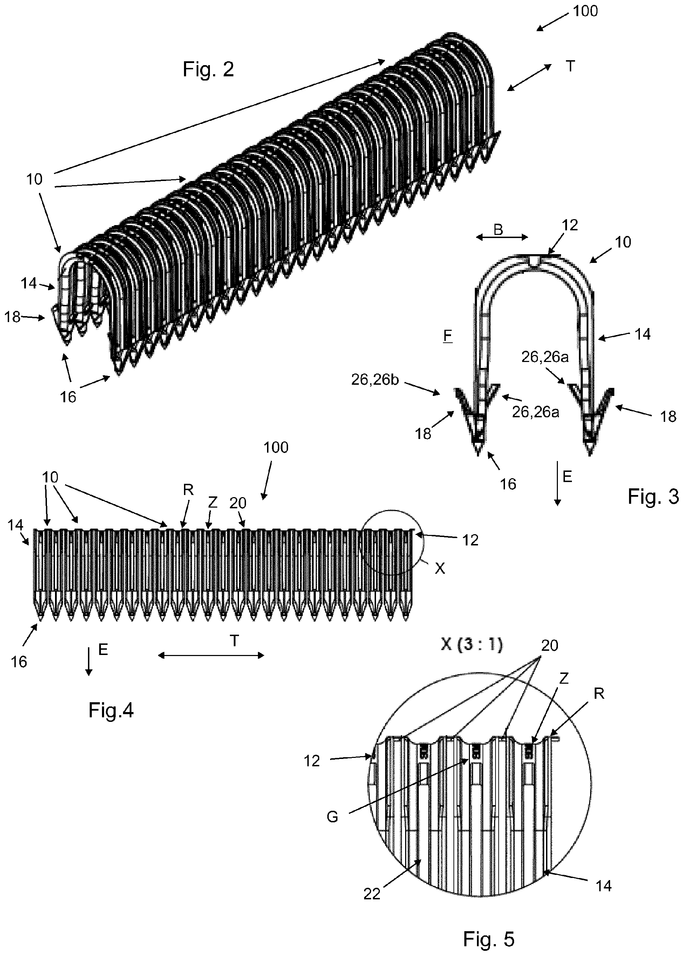

Während Fig. 1 eine Tackernadel 10 in Alleinstellung zeigt, zeigen die Fig. 2 bis 7 ein Tackernadelanordnung 100 mit mehreren Tackernadeln 10. Die Tackernadeln 10 der Tackernadelanordnung 100 sind hier alle gleich ausgebildet und entsprechen der Tackernadel 10 nach Fig.1.

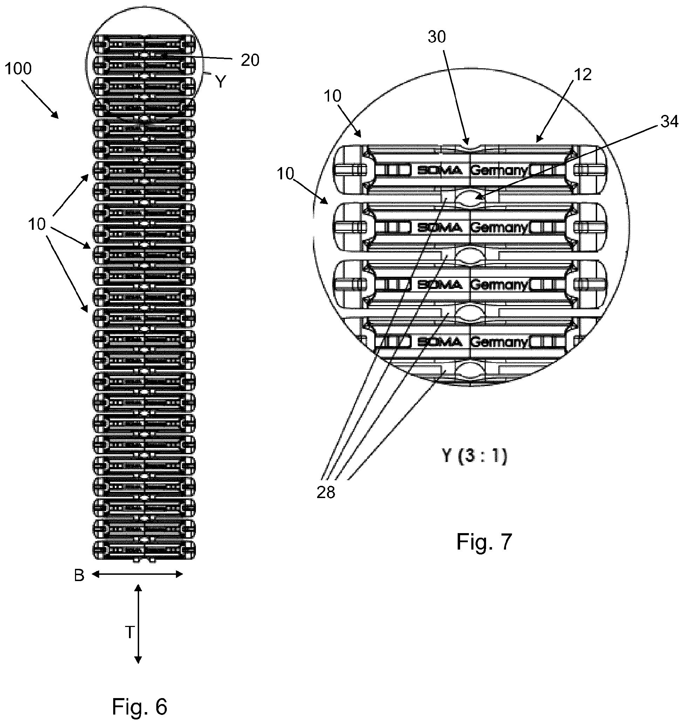

Fig. 2 zeigt schematisch in einer perspektivischen Ansicht eine Ausführungsform einer Tackernadelanordnung 10 mit Tackernadeln gemäß Fig. 1. Fig. 3 zeigt schematisch in einer Vorderansicht die Tackernadelanordnung 100 nach Fig. 2. Fig. 4 zeigt schematisch in einer Seitenansicht die Tackernadelanordnung 100 nach Fig. 2. Fig. 5 zeigt schematisch einen Detailausschnitt X der Ausführungsform nach Fig. 4. Fig. 6 zeigt schematisch in einer Draufsicht die Tackernadelanordnung 100 nach Fig. 2. Fig. 7 zeigt schematisch einen Detailausschnitt Y der Ausführungsform nach Fig. 6.

Die Tackernadelanordnung 100 umfasst mehrere Tackernadeln 10, die hier alle gleich ausgebildet sind. Entsprechend kann auf eine erneute detaillierte Beschreibung der Merkmale der einzelnen Tackernadeln 10 soweit verzichtet werden.

In der Tackernadelanordnung 100 sind die benachbarten Tackernadeln 10 über das jeweilige Verbindungselement 20 miteinander verbunden. Dabei ist das Verbindungselement 20 einteilig mit den verbundenen Tackernadeln 10 ausgeführt. Das die benachbarten Tackernadeln 10 verbindende Verbindungselement 10 umfasst zwei Stege 28. Jeder Steg 28 ist einteilig mit der Tackernadelanordnung 100 ausgeformt. Für ein Abtrennen einzelner Tackernadeln 10 von der Tackernadelanordnung 100 ist mindestens eine Sollbruchstelle zum Trennen der verbundenen Tackernadeln 10 an dem Steg vorgesehen. Hierüber sind mehrere Tackernadeln 10 trennbar zu der Tackernadelanordnung 100 verbunden. Dabei sind die Tackernadeln 10 so verbunden, dass diese zum Einsatz in einem Tacker- oder Setzgerät verwendbar sind. Die Tackernadeln 10 sind dabei bündig hintereinander angeordnet, wie beispielsweise aus Fig. 3 ersichtlich ist. Sämtliche Tackernadeln 10 sind in der Vorderansicht fluchtend und bündig ausgerichtet. Die Anordnung erfolgt dabei so, dass die Anordnung in einer Blickrichtung auf eine Frontseite F eine etwa U-förmige Form aufweist (Fig. 3). Die Tackernadeln 10 sind für eine bündige Verbindung über die jeweiligen Verbindungselemente 20 miteinander verbunden. Dabei sind je zwei benachbarte Tackernadeln 10 über die jeweiligen Verbindungselemente 20 integriert miteinander verbunden. Die gesamte Anordnung ist einteilig ausgeführt. Die Verbindungselemente 20 benachbarter Tackernadeln 10 sind somit ebenfalls einteilig ausgebildet und gehen ineinander über bzw. münden in das jeweilig andere Mittelstück 12.

Die ineinander übergehenden Verbindungselemente 20 sind stegförmig ausgebildet. Genauer weist ein Verbindungselement 20 zwei stegartige Anformungen 28 auf. Um die Tackernadeln 10 in einem Tacker- oder Setzgerät zu verwenden und einzeln zu setzen, ist zum Trennen der Tackernadelanordnung 100 an den die Tackernadeln 10 verbindenden Verbindungselementen 10 eine Sollbruchstelle vorgesehen. Diese ist vorzugsweise als Materialverdünnung bzw. Aussparung 34 zwischen den Stegen 28 ausgebildet. Die Verbindungselemente 20 erlauben eine gekrümmte oder gebogene Anordnung der Tackernadeln 10. Entsprechend sind die jeweiligen Verbindungselemente 20 elastisch ausgebildet, sodass die Verbindungselemente 20 als eine Art Filmscharnier fungieren. Über die Sollbruchstelle ist die Elastizität der Verbindungselemente 10 begrenzt.

In Fig. 4 ist die Tackernadelanordnung 100 in einer Seitenansicht zu sehen. Hier ist im Bereich des Mittelstücks 12 deutlich die konkave Form mit dem vertieften Zwischenabschnitt Z und dem erhöhten Rand R zu erkennen. Zwischen den Mittelstücken ist das Verbindungselement 20 ausgebildet.

Fig. 5 zeigt die konkave Form in einer vergrößerten Detailansicht. Der Übergang von dem erhöhten Rand R zu dem vertieften Zwischenstück Z ist abgerundet. In dem Zwischenstück Z ist ein abgeflachter Bereich vorgesehen, der beispielsweise Platz für Gravuren G, Beschriftungen und dergleichen aufweist. Zwischen erhöhten Rändern R benachbarter Tackernadeln 10 ist das jeweilige Verbindungselement 20 angeordnet. Dieses ist in der Draufsicht gemäß Fig. 6 und 7 deutlicher zu erkennen.

Fig. 6 zeigt die Tackernadelanordnung 100 in einer Draufsicht. Etwa mittig ist das Verbindungselement 20 an das jeweilige Mittelstück 12 angeformt. Das Verbindungselement 20 ist hier als stegförmige Anorndung 28 mit zwei Stegen, die mittels eines Freiraums oder einer Aussparung 34 voneinander beabstandet sind. Dabei ist integriert eine Sollbruchstelle ausgebildet, wobei die Stege 28 eine Grundelastizität aufweisen, welche die Anordnung 100 für eine gebogene Ausrichtung, beispielsweise in einem Setzgerät, ausbildet. Die stegförmige Anorndung 28 ist in Fig. 7 im Detail vergrößert dargestellt.

Gemäß Fig. 7 weist das Mittelstück 12 auf einer Seite eine Aussparung oder Ausformung 30 auf. Auf der gegenüberliegenden Seite weist das Mittelstück 12 die stegförmige Anordnung 28 auf. Diese umfasst zwei Stege, die über die Aussparung 34 voneinander beabstandet sind. Die beiden Stege 28, die parallel zueinander verlaufen, bilden eine Art Film- oder Scharniergelenk aus. Über die Materialstärke ist eine Sollbruchstelle ausgebildet, welche ein Abtrennen der Tackernadeln 10 aus der Tackernadelanordnung 100 ermöglicht. Die Sollbruchstelle ist integriert durch die Dicke des Materials ausgebildet.

Die Tackernadeln 10 wird mittels Spritzgussverfahren, hergestellt, wobei das jeweilige Verbindungselement 20 einteilig und/oder integriert mit dem Mittelstück 12 in einem Arbeitsschritt geformt wird. Die Tackernadel 10 und/oder die Tackernadelanordnung 20 ist bzw. sind einteilig ausgebildet, vorzugsweise mit einem Gussverfahren. Die beiden für eine Verbindung zweier benachbarter Tackernadeln 10 vorgesehenen Verbindungselemente 20 sind bei einer Tackernadelanordnung 100 einteilig miteinander verbunden ausgeführt. Das jeweilige Verbindungselement 20 ist einteilig mit dem Mittelstück 12 und/oder der Tackernadel 10 ausgeführt. Das Verbindungselement 20 ist an dem Mittelstück 12 etwa mittig ausgeformt. Bei mehreren Verbindungselementen sind diese entsprechend einer gedachten Mittellinie gleich beabstandet von der Mittellinie entfernt angeordnet.

### Bezugszeichenliste

- 10: Tackernadel
- 12: Mittelstück
- 14: Schenkel
- 16: Spitze
- 18: Widerhakenelement
- 20: Verbindungselement
- 22: Schlitz
- 24: Nut
- 26: Arm
- 28: Anformung (Steg)
- 30: Ausformung
- 32: Anformung (Welle)

- A: Außenseite
- B: Breitenrichtung
- E: Einbringrichtung
- G: Gravur
- R: Rand
- S: Schenkelrichtung
- T: Tiefenrichtung
- Z: Zwischenabschnitt

## Patentansprüche

1. Tackernadel (10), insbesondere eine Tackernadel (10) zum bodenseitigen Befestigung von Bodenheizungsleitungen, mit einem Mittelstück (12), von dem beabstandet voneinander zwei Schenkel (14) abragen, wobei an dem von dem Mittelstück (12) entfernten Ende der Schenkel (14) je eine Spitze (16) ausgebildet ist, und die Schenkel (14) mindestens ein Widerhakenelement (18) aufweisen, wobei die Tackernadel (10) mittels Spritzgussverfahren hergestellt ist.

2. Tackernadel (10) nach Anspruch 1, **dadurch gekennzeichnet, dass** an dem Mittelstück (12) mindestens ein Verbindungselement (20) ausgebildet ist, welches für eine Verbindung mit einer anderen Tackernadel (10) vorgesehen ist.

3. Tackernadel (10) nach Anspruch 1 oder 2, **dadurch gekennzeichnet, dass** die Spitze (16) kegelförmig ausgebildet ist.

4. Tackernadel (10) nach einem der vorherigen Ansprüche 1 bis 3, **dadurch gekennzeichnet, dass**
mindestens einer der Schenkel (14) einen in Schenkelrichtung (S) verlaufenden Schlitz (22) aufweist.

5. Tackernadel (10) nach einem der vorherigen Ansprüche 1 bis 4, **dadurch gekennzeichnet, dass**
eine Außenseite (A) der Schenkel (14) und/oder des Mittelstücks (12) konkav geformt ist mit einem jeweils seitlich erhöhten Rand (R) und einem demgegenüber vertieften Zwischenabschnitt (Z).

6. Tackernadel (10) nach einem der vorherigen Ansprüche 1 bis 5, **dadurch gekennzeichnet, dass**
mindestens ein Widerhakenelement (18) mindestens eine Nut (24) aufweist.

7. Tackernadelanordnung (100), umfassend mehrere Tackernadeln, von denen mindestens eine Tackernadel (10) nach einem der vorherigen Ansprüche 1 bis 6 ausgebildet ist.

8. Tackernadelanordnung (100) nach Anspruch 7, **dadurch gekennzeichnet, dass** mindestens zwei benachbarte Tackernadeln (10) über mindestens ein Verbindungselement (20) miteinander verbunden sind.

9. Tackernadelanordnung (100) nach Anspruch 7 oder 8, **dadurch gekennzeichnet, dass**
das mindestens eine, die benachbarten Tackernadeln (10) verbindende Verbindungselement (20) als einteiliger Steg (28) ausgebildet ist, der mindestens eine Sollbruchstelle zum Trennen der verbundenen Tackernadeln (10) aufweist.

10. Verfahren zur Herstellung mindestens einer Tackernadel (10), insbesondere einer Tackernadel (10) nach einem der vorherigen Ansprüche 1 bis 6 und/oder einer Tackernadelanordnung (100) mit mehreren Tackernadeln (10), insbesondere einer Tackernadelanordnung (100) nach einem der vorherigen Ansprüche 7 bis 9, **dadurch gekennzeichnet, dass**
die jeweilige Tackernadel (10) mittels Gussverfahren, insbesondere mittels Spritzgussverfahren, hergestellt wird wobei das jeweilige Verbindungselement (20) einteilig und/oder integriert mit dem Mittelstück (12) in einem Arbeitsschritt geformt wird.

11. Verfahren nach Anspruch 10, **dadurch gekennzeichnet, dass** mehrere benachbarte Verbindungselemente (20) in dem einen Arbeitsschritt einteilig und/oder integriert miteinander verbunden geformt werden und/oder mehrere Tackernadeln (10) miteinander einteilig und/oder integriert in einem Arbeitsschritt geformt werden.

12. Verfahren nach einem der Ansprüche 11 oder 12, **dadurch gekennzeichnet, dass** das Formen der Tackernadel(n) (10) schieberfrei ohne Einsatz von beweglichen Schiebern in einem Arbeitsschritt durchgeführt wird.

13. Verwendung mindestens einer Tackernadel (10) nach einem der vorherigen Ansprüche 1 bis 6 und/oder einer Tackernadelanordnung (100) nach einem der vorherigen Ansprüche 7 bis 9 zur Befestigung von Leitungen oder eines Leitungssystem, insbesondere von Fußbodenheizungsleitungen oder eines Fußbodenheizungleitungssystems, an einer Trägerfläche, insbesondere einem Fußboden.

## Geänderte Patentansprüche

### Geänderte Patentansprüche gemäss Regel 137(2) EPÜ.

1. Tackernadel (10), insbesondere eine Tackernadel (10) zum bodenseitigen Befestigung von Bodenheizungsleitungen, mit einem Mittelstück (12), von dem beabstandet voneinander zwei Schenkel (14) abragen, wobei an dem von dem Mittelstück (12) entfernten Ende der Schenkel (14) je eine Spitze (16) ausgebildet ist, und die Schenkel (14) mindestens ein Widerhakenelement (18) aufweisen, **dadurch gekennzeichnet, dass** die Tackernadel (10) mittels Spritzgussverfahren hergestellt ist, wobei das Mittelstück (12) einen Querschnitt aufweist, wobei der Querschnitt eine gewölbte Form zumindest an einer Seite des Mittelstücks (12) aufweist, wobei eine Außenseite (A) des Mittelstücks (12) konkav geformt ist mit einem jeweils seitlich erhöhten Rand (R) und einem demgegenüber vertieften Zwischenabschnitt (Z).

2. Tackernadel (10) nach Anspruch 1, **dadurch gekennzeichnet, dass** mindestens einer der Schenkel (14) einen in Schenkelrichtung (S) verlaufenden Schlitz (22) aufweist, wobei der Schlitz (22) als Langloch ausgebildet ist, welches den Schenkel (14) durchdringt.

3. Tackernadel (10) nach Anspruch 1 oder 2, **dadurch gekennzeichnet, dass** die Spitze (16) kegelförmig ausgebildet ist.

4. Tackernadel (10) nach einem der vorherigen Ansprüche 1 bis 3, **dadurch gekennzeichnet, dass**
an dem Mittelstück (12) mindestens ein Verbindungselement (20) ausgebildet ist, welches für eine Verbindung mit einer anderen Tackernadel (10) vorgesehen ist, wobei das Verbindungselement (20) einteilig mit dem Mittelstück (12) ausgebildet ist.

5. Tackernadel (10) nach einem der vorherigen Ansprüche 1 bis 4, **dadurch gekennzeichnet, dass**
eine Außenseite (A) der Schenkel (14) konkav geformt ist mit einem jeweils seitlich erhöhten Rand (R) und einem demgegenüber vertieften Zwischenabschnitt (Z).

6. Tackernadel (10) nach einem der vorherigen Ansprüche 1 bis 5, **dadurch gekennzeichnet, dass**
mindestens ein Widerhakenelement (18) mindestens eine Nut (24) aufweist.

7. Tackernadelanordnung (100), umfassend mehrere Tackernadeln, von denen mindestens eine Tackernadel (10) nach einem der vorherigen Ansprüche 1 bis 6 ausgebildet ist.

8. Tackernadelanordnung (100) nach Anspruch 7, **dadurch gekennzeichnet, dass** mindestens zwei benachbarte Tackernadeln (10) über das mindestens eine Verbindungselement (20) miteinander verbunden sind, wobei die gesamte Anordnung (100) einteilig ausgeführt ist.

9. Tackernadelanordnung (100) nach Anspruch 7 oder 8, **dadurch gekennzeichnet, dass**
das mindestens eine, die benachbarten Tackernadeln (10) verbindende Verbindungselement (20) als einteiliger Steg (28) ausgebildet ist, der mindestens eine Sollbruchstelle zum Trennen der verbundenen Tackernadeln (10) aufweist.

10. Verfahren zur Herstellung mindestens einer Tackernadel (10) nach einem der vorherigen Ansprüche 1 bis 6 und/oder einer Tackernadelanordnung (100) mit mehreren Tackernadeln (10) nach einem der vorherigen Ansprüche 7 bis 9, **dadurch gekennzeichnet, dass**
die jeweilige Tackernadel (10) mittels Gussverfahren, insbesondere mittels Spritzgussverfahren, hergestellt wird wobei das jeweilige Verbindungselement (20) einteilig und/oder integriert mit dem Mittelstück (12) in einem Arbeitsschritt geformt wird.

11. Verfahren nach Anspruch 10, **dadurch gekennzeichnet, dass**
mehrere benachbarte Verbindungselemente (20) in dem einen Arbeitsschritt einteilig und/oder integriert miteinander verbunden geformt werden und/oder mehrere Tackernadeln (10) miteinander einteilig und/oder integriert in einem Arbeitsschritt geformt werden.

12. Verfahren nach einem der Ansprüche 11 oder 12, **dadurch gekennzeichnet, dass** das Formen der Tackernadel(n) (10) schieberfrei ohne Einsatz von beweglichen Schiebern in einem Arbeitsschritt durchgeführt wird, wobei die Tackernadel (10) so ausgebildet ist, dass diese in entsprechenden Gussformen schieberfrei herstellbar ist.

13. Verwendung mindestens einer Tackernadel (10) und/oder einer Tackernadelanordnung (100) zur Befestigung von Leitungen oder eines Leitungssystem, insbesondere von Fußbodenheizungsleitungen oder eines Fußbodenheizungleitungssystems, an einer Trägerfläche, insbesondere einem Fußboden, **dadurch gekennzeichnet, dass**
die Tackernadel (10) nach einem der vorherigen Ansprüche 1 bis 6 und/oder die Tackernadelanordnung (100) nach einem der vorherigen Ansprüche 7 bis 9 ausgebildet ist.
